(19) Europäisches Patentamt
European Patent Office
Office européen des brevets

(11) Veröffentlichungsnummer: **0 261 405**
**A2**

(12) **EUROPÄISCHE PATENTANMELDUNG**

(21) Anmeldenummer: **87112129.9**

(51) Int. Cl.⁴: **G03G 9/08** , C08G 61/12

(22) Anmeldetag: **21.08.87**

(30) Priorität: **26.08.86 DE 3628894**

(43) Veröffentlichungstag der Anmeldung:
**30.03.88 Patentblatt 88/13**

(84) Benannte Vertragsstaaten:
**CH DE FR GB IT LI**

(71) Anmelder: **HOECHST AKTIENGESELLSCHAFT**
**Postfach 80 03 20**
**D-6230 Frankfurt am Main 80(DE)**

(72) Erfinder: **Macholdt, Hans-Tobias, Dr.**
**Waldstrasse 20**
**D-6100 Darmstadt(DE)**
Erfinder: **Sieber, Alexander, Dr.**
**Wartburgstrasse 76**
**D-6230 Frankfurt am Main 80(DE)**
Erfinder: **Feldhues, Michael, Dr.**
**Königsteiner Strasse 1a**
**D-6232 Bad Soden am Taunus(DE)**

(54) **Kondensationsprodukte 5- gliedriger Heterocyclen mit triboelektrischer Steuerwirkung für elektrophotographische Aufzeichnungsverfahren.**

(57) Polymere Kondensationsprodukte von 5-gliedrigen Heterocyclen mit konjugierten $\pi$-Elektronensystemen mit einem Stickstoff-, Sauerstoff-oder Schwefelaotm als Heteroatom, die in ihrer oxidierten, wirksamen, kationischen Form eine entsprechende Zahl von Anionen enthalten, mit triboelektrischer Steuerwirkung für elektrophotographische Aufzeichnungsverfahren und der en Verwendung zur Herstellung von Tonern oder Entwicklern, die zum elektrophotographischen Kopieren bzw. Vervielfältigen von Vorlagen sowie zum Drucken von elektronisch, optisch oder magnetisch gespeicherten Informationen eingesetzt werden.

EP 0 261 405 A2

Xerox Copy Centre

# Kondensationsprodukte 5-gliedriger Heterocyclen mit triboelektrischer Steuerwirkung für elektrophotographische Aufzeichnungsverfahren

Die vorliegende Erfindung betrifft Kondensationsprodukte 5-gliedriger Heterocyclen mit einem Stickstoff-, Sauerstoff-oder Schwefelatom als Heteroatom die triboelektrische Steuerwirkung für elektrophotographische Aufzeichnungsverfahren zeigen. Auf Grund ihrer Farbigkeit eignen sich die Steuermittel auch zum Einfärben von blauen und grünen Tonern bzw. Entwicklern oder zum Schönen von schwarzen und braunen Tonern bzw. Entwicklern. Die Steuermittel absorbieren im Bereich zwischen 600 und 900 nm in hohem Maße elektromagnetische Strahlung und begünstigen somit bei einer Strahlungsfixierung auch den Tonerfixiervorgang.

Bei elektrophotographischen Aufzeichnungsverfahren wird beispielsweise auf einer Photoleitertrommel ein "latentes Ladungsbild" erzeugt. Dies gelingt durch Aufladung der Photoleitertrommel durch eine Corona-Entladung und anschließende bildmäßige Belichtung der elektrostatisch aufgeladenen Oberfläche der Photoleitertrommel, wobei durch die Belichtung der Ladungsabfluß zur geerdeten Unterlage an den belichteten Stellen bewirkt wird. Anschließend wird das so erzeugte "latente Ladungsbild" durch Aufbringen eines Toners entwickelt.
In einem darauffolgenden Schritt wird der Toner von der Photoleitertrommel auf beispielsweise Papier, Textilien, Folien oder Kunststoff übertragen und dort beispielsweise durch Druck, Strahlung, Hitze oder Lösungsmitteleinwirkung fixiert. Der benutzte Photoleiter wird anschließend gereinigt und steht für einen neuen Aufzeichnungsvorgang zur Verfügung.

In zahlreichen Patentschriften wird die Optimierung von Tonern beschrieben, wobei u.a. der Einfluß des Tonerbindemittels (Variation von Harz/Harzkomponenten oder Wachs/Wachskomponenten), der Einfluß von Steuermitteln oder anderen Zusatzstoffen oder der Einfluß von Carriern (bei Zweikomponentenentwicklern) und Magnetpigmenten (bei Einkomponentenentwicklern) untersucht wurden (US-PS 2 221 776). Ein Maß für die Tonerqualität ist seine spezifische Aufladbarkeit Q/M (Ladung pro Masseeinheit).

Zeil der vorliegenden Erfindung war, Verbindungen zu finden, die bei geeigneter Thermostabilität und Dispergierbarkeit dem Toner eine triboelektrische Aufladbarkeit geben, die als Farbmittel für blaue und grüne oder Schönungszusatz für schwarze, gelbe, rote und braune Toner bzw. Entwickler geeignet sind und die im Bereich zwischen 600 und 900 nm elektromagnetische Strahlung in hohem Maße absorbieren.

In neuerer Zeit haben insbesondere positiv aufladbare Toner an Bedeutung gewonnen, u.a. wegen ihres Einsatzes in Laserdruckern mit anorganischen Photoleitern oder in Kopierern, die mit organischen Photoleitern (OPC) zum Aufzeichnen des latenten Ladungsbildes ausgerüstet sind.

Die kostengünstigen organischen Photoleiter finden vor allem wegen ihrer vielseitigen Verwendbarkeit, z.B. als Trommel oder Masterband und wegen ihrer einfachen Entsorgung, in zunehmendem Maße Verwendung.
Zudem ist bei bestimmten Tonern bzw. Entwicklern von großem Interesse, daß eine der Toner-bzw. Entwickler-Komponenten in hohem Maße elektromagnetische Strahlung im Bereich zwischen 600 und 900 nm absorbiert; dies ist vor allem bei Hochleistungsgeräten (wie z.B. den Laserdruckern mit Strahlungsfixierung und Druckgeschwindigkeiten von über 100 Seiten pro Minute) zum Beschleunigen des Fixiervorganges auf dem Papier von hoher praktischer Bedeutung. Bei solchen Hochleistungsgeräten ist die Geschwindigkeit des Druck-bzw. Kopiervorganges nicht nur von der Erzeugung des latenten Bildes auf dem Photoleiter und dem anschließenden Tonerübertrag abhängig, sondern auch von der Zeitdauer der Fixierung des Toners auf dem Papier. Hierbei ist die Schwierigkeit, daß bei großen Druck-/Kopiergeschwindigkeiten das einzelne Blatt nur sehr kurz in der Fixierstation verweilt. Bei der herkömmlicherweise eingesetzten Wärme-bzw. Wärme/Druck-Fixierung müßte daher für Hochleistungsgeräte die Temperatur in der Fixierstation stark erhöht werden. Neben dem Gesichtspunkt, aus apparativen Gründen die Temperatur nicht beliebig erhöhen zu können, hätte eine starke Temperaturerhöhung in der Fixierstation vor allem den wesentlichen Nachteil, daß sich im Falle eines Papierstaues ein in der Fixierstation befindliches Blatt entzünden könnte.

Um bei Hochleistungsgeräten die Fixiertemperatur möglichst niedrig halten zu können und gleichzeitig eine schnelle Fixierung zu ermöglichen, werden in der Praxis dem Toner bzw. Entwickler Substanzen beigemengt, die elektromagnetische Strahlen im Bereich von 600 bis 900 nm (Wärmestrahlung) absorbieren. Auf diese Weise kann der Toner - bei entsprechender Bestrahlung - die Energie zum Fixieren schneller aufnehmen.

Ein anderer Vorteil von Tonern bzw. Entwicklern, die Substanzen enthalten, welche elektromagnetische Strahlung im Bereich von 600 bis 900 nm absorbieren, ist, daß die mit solchen Tonern bzw. Entwicklern erzeugten Abbildungen bzw. Informationen einerseits maschinell IR-lesbar, andererseits aber auch für das menschliche Auge erkennbar sind.

Ziel der vorliegenden Erfindung war es daher, Substanzen zu finden, die neben ihrer spezifischen Absorption von elektromagnetischer Strahlung im Wellenlängenbereich von 600 bis 900 nm und einer Thermostabilität von über 200 °C vor allem die benötigten triboelektrischen Steuereigenschaften für Toner und Entwickler besitzen.

Um elektrophotographische Toner oder Entwickler mit positiver triboelektrischer Aufladbarkeit zu erhalten, werden häufig sogenannte Steuermittel (auch Ladungskontrollmittel genannt) zugegeben, wie z.B. Nigrosine, quaternäre Ammoniumverbindungen (US-PS 4 560 635) oder Metallkomplexe (EP 0 141 377).

Neben der Suche nach geeigneten Ladungssteuermitteln für elektrophotographische Toner oder Entwickler wird andererseits nach Verbindungen gesucht, die im Bereich zwischen 600 und 900 nm in hohem Maße elektromagnetische Strahlung absorbieren, wie beispielsweise in US-PS 4 539 284 beschrieben.

Verbindungen, die in hohem Maße im Bereich von 600 bis 900 nm elektromagnetische Strahlung absorbieren, werden für die Verwendung in militärischen Tarnanstrichen, beispielsweise in DE 3 438 390 A 1 beschrieben. Bei den für diesen Zweck beanspruchten Verbindungen handelt es sich um Substanzen aus der Klasse der Polythiophene, Polypyrrole und Polyfurane.

Es hat sich überraschenderweise gezeigt, daß Substanzen aus der Klasse der Polythiophene, Polypyrrole und Polyfurane neben ihrer bekannten Eigenschaft, in hohem Maße im Bereich zwischen 600 und 900 nm elektromagnetische Strahlung zu absorbieren, in Tonern oder Entwicklern hochwirksame triboelektrische Steuermittel darstellen, die benötigte Thermostabilität bis über 200 °C besitzen und zudem noch als Farbmittel für blaue oder grüne bzw. als Schönungszusatz für schwarze, rote, gelbe oder braune Toner oder Entwickler geeignet sind.

Gegenstand der vorliegenden Erfindung sind somit polymere Kondensationsprodukte 5-gliedriger heterocyclischer Verbindungen mit konjugierten $\pi$-Elektronensystemen mit einem Stickstoff-, Sauerstoff- oder Schwefelatom als Heteroatom, die in ihrer oxidierten, wirksamen, kationischen Form eine entsprechende Zahl von Anionen enthalten, mit triboelektrischer Steuerwirkung für elektrophotographische Aufzeichnungsverfahren.

Von besonderer Bedeutung sind

a) Polythiophen-Verbindungen mit triboelektrischer Steuerwirkung, die aus einem Polymeren bestehen, das im wesentlichen Struktureinheiten enthält, die sich von Monomeren der Formel I

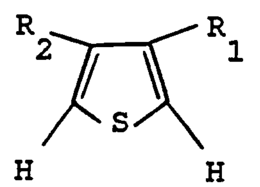

(I)

ableiten, wobei der oxidierten, wirksamen Form zur Kompensation der positiven Ladungen eine entsprechende Zahl von Anionen zugeordnet ist, wie beispielsweise ein Tetrafluorborat-, Hexafluorphosphat-, Hexafluorarsenat-, Hexafluorantimonat-, Halogenid-, Sulfat-, Hydrogensulfat-, Phosphat-, Alkylsulfonat-, Perfluoralkylsulfonat-oder Arylsulfonat-Anion, vorzugsweise ein Phenylsulfonat-oder 4-Toluolsulfonat-Anion, und wobei $R_1$ und $R_2$ unabhängig voneinander Wasserstoff-oder Halogenatome, vorzugsweise Chlor-oder Bromatome, Alkoxy($C_1$-$C_4$)-,Alkyl($C_1$-$C_4$)-, primäre Amino-, Monoalkyl($C_1$-$C_4$)-amino-oder Dialkyl($C_1$-$C_4$)-aminogruppen bedeuten,

b) Polypyrrol-Verbindungen mit triboelektrischer Steuerwirkung, die aus einem Polymeren bestehen, das im wesentlichen Struktureinheiten enthält, die sich von Monomeren der Formel II

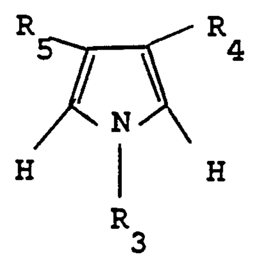

(II)

ableiten, wobei der oxidierten, wirksamen Form zur Kompensation der positiven Ladungen eine entsprechende Zahl von Anionen zugeordnet ist, wie beispielsweise ein Tetrafluorborat-, Hexafluorphosphat-,

Hexafluorarsenat-, Hexafluorantimonat-, Halogenid-, Sulfat-, Hydrogensulfat-, Phosphat-, Alkyl-, Perfluoralkyl oder Arylsulfonat-Anion, vorzugsweise ein Phenylsulfonat-oder 4-Toluolsulfonat-Anion, und wobei $R_4$ und $R_5$ unabhängig voneinander Wasserstoff-oder Halogenatome, vorzugsweise Chlor-oder Bromatome, Alkoxy($C_1$-$C_4$)-, Alkyl($C_1$-$C_4$)-, Cyan-, primäre Amino-, Monoalkyl($C_1$-$C_4$)-amino-oder Dialkyl($C_1$-$C_4$)-aminogruppen bedeuten, und $R_3$ ein Wasserstoffatom, eine Alkyl($C_1$-$C_4$)-oder Arylgruppe, vorzugsweise eine Phenylgruppe, darstellt,

c) Polyfuran-Verbindungen mit triboelektrischer Steuerwirkung, die aus einem Polymeren bestehen, das im wesentlichen Struktureinheiten enthält, die sich von Monomeren der Formel III

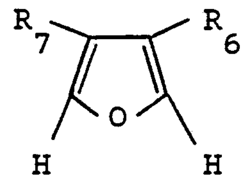

(III)

ableiten, wobei der oxidierten, wirksamen Form zur Kompensation der positiven Ladungen eine entsprechende Zahl von Anionen zugeordnet ist, wie beispielsweise ein Tetrafluorborat, Hexafluorophosphat, Hexafluorarsenat, Hexafluorantimonat, Halogenid, Sulfat, Hydrogensulfat, Phosphat, Alkyl-, Perfluoralkyl-oder Arylsulfonat-Anion, vorzugsweise ein Phenylsulfonat-oder 4-Toluolsulfonat-Anion, und wobei die Substituenten $R_6$ und $R_7$ unabhängig voneinander Wasserstoff-oder Halogenatome, vorzugsweise Chlor-oder Bromatome, Alkoxy($C_1$-$C_4$)-, Alkyl($C_1$-$C_4$)-, primäre Amino-, Monoalkyl($C_1$-$C_4$)amino-oder Dialkyl($C_1$-$C_4$)-aminogruppen bedeuten.

Gegenstand der vorliegenden Erfindung ist ferner die Verwendung der vorstehend genannten Polythiophen-, Polypyrrol-und Polyfuran-Verbindungen zur Herstellung von Tonern oder Entwicklern, die zum elektrophotographischen Kopieren bzw. Vervielfältigen von Vorlagen sowie zum Drucken von elektronisch, optisch oder magnetisch gespeicherten Informationen eingesetzt werden, ferner die Verwendung der genannten polymeren Verbindungen zur Strahlungsfixierung auf einem Träger sowie die Verwendung von Tonern oder Entwicklern, die eine der vorstehend genannten polymeren Verbindungen enthalten.

Man erhält, wie in den nachstehenden Beispielen gezeigt, bei entsprechender Einarbeitung der Verbindung, wobei gegebenenfalls Hydrolyse-und Oxidationsempfindlichkeiten berücksichtigt werden müssen, in der Regel ausgeprägte, positive Steuereffekte auf die Toneraufladbarkeit.

Die Herstellung der dieser Erfindung zugrundeliegenden Verbindungen ist in der Patentanmeldung P36 28 895.0 sowie in der Literatur [G. Tourillon, F. Garnier J. Electroanal. Chem. 135, 1982, 173 bzw. in R.E. Myers J. Electron. Mater. 1986, 61 bzw. in DE 34 17 942 A2 bzw. in DE 32 24 157 A1 bzw. WO 87 00 677 A bzw. in EP ] beschrieben.

Charakteristisch für die Verbindungen sind - neben ihrem chemischen Aufbau - ihre Thermostabilität bis über 200 °C und ihr Absorptionsverhalten gegenüber elektromagnetischer Strahlung, insbesondere im Bereich von 600-900 nm.

Die erfindungsgemäß beanspruchten Verbindungen haben den Vorteil, die ohnehin schon komplexen Tonerrezepturen um bis zu zwei Bestandteile zu vereinfachen, da sie Steuermittel, Wärmestrahlungs-Absorber und Farb-bzw. Schönungszusatz für Toner und Entwickler in einem sind. So können Probleme, die durch Zusatz eines Steuermittels oder durch Zusatz eines Wärmestrahlungs-Absorbers oder von beiden auftreten können, wie beispielsweise Unverträglichkeiten oder allmähliches Auswandern dieser Zusatzstoffe, grundsätzlich vermieden werden.

Die Höhe der elektrostatischen Aufladung des Toners unter Verwendung der beanspruchten Substanzen wurde an Standardsystemen unter gleichen Bedingungen (wie gleiche Dispergierzeiten, gleiche Teilchengrößenverteilung, gleiche Teilchenform) bei 23 °C und 50 % relativer Luftfeuchtigkeit gemessen. Die Aktivierung des Toners in einem Zweikomponentenentwickler erfolgte durch Verwirbelung des Toners mit einem Carrier (3 Teile Toner auf 97 Teile Carrier) 30 Minuten auf einer Rollbank (150 Umdrehungen pro Minute).

Bei der Bestimmung des Q/M-Wertes ist die Teilchengröße von großem Einfluß. Es wurde daher streng darauf geachtet, daß die bei den Sichtungen erhaltenen und in nachstehenden Beispielen aufgeführten Tonerproben bezüglich der Teilchengrößenverteilung einheitlich waren.

Die nachstehenden Beispiele dienen zur Erläuterung der Erfindung, ohne sie darauf zu beschränken. Die angegebenen Teile bedeuten Gewichtsteile.

Beispiel 1

1,5 Teile eins polymeren Kondensationsprodukts von 3-Methoxythiphen (hergestellt wie am Ende dieses Beispiels beschrieben) wurden mittels eines Kneters der Firma Werner & Pfleiderer 60 Minuten in 98,5 Teilen Tonerbindemittel (®Dialec S 309 (Styrol-Methacrylat-Copolymer) der Firma Diamond Shamrock) dispergiert. Anschließend wurde auf der Laboruniversalmühle 100 LU (Firma Alpine) gemahlen und dann auf dem Zentrifugalsichter 100 MZR (Firma Alpine) klassifiziert.

Die gewünschte Teilchenfraktion wurde mit einem Carrier aus mit Styrol-Methacrylat 90:10 beschichteten Magnetit-Teilchen der Größe 50 bis 200 µm des Typs 90 µm Xerographic Carrier der Firma Plasma Materials Inc. aktiviert.

Die Messung erfolgte an einem üblichen Q/M-Meßstand (vgl. hierzu J. H. Dessauer, H. E. Clark "Xerography and related Processes", Focal Press, N. Y. 1965, Seite 289). Durch Verwenden eines Siebes mit einer Maschenweite von 25 µm (508 Mesh per inch) der Firma Gebrüder Kufferath wurde sichergestellt, daß bei den Tonerausblasungen kein Carrier mitgerissen werden kann./

Der Q/M-Wert wurd zu +21,6 µC/g bestimmt.

Die Herstellung des eingesetzten polymeren Kondensationsprodukts erfolgte durch anodische Oxidation von 3-Methoxythiophen (99 %ig) in Acetonitril unter Verwendung von Tetraethylammoniumtetrafluorborat als Leitsalz an einer Kohlefilzelektrode ( Sigratherm KFB2 der Firma Sigri, Flächengewicht 0,35 kg/m², spezifische Oberfläche (BET) ca. 0,5 m²/g, 80 mm Länge, 55 mm Breite, 2 mm Dicke). Das an der Anode haftende Rohprodukt wurde zunächst mit Methylenchlorid und Wasser gewaschen, anschließend mit Acetonitril aus dem mit dem Polymeren beladenen Kohlefilz herausgelöst und durch Zentrifugieren von gegebenenfalls suspendiertem Feststoff befreit. Durch Einengen der Lösung wurde die obengenannte polymere Wirksubstanz gewonnen.

Beispiel 2

1,5 Teile eines polymeren Kondensationsprodukts von 3-Methoxythiophen (hergestellt wie am Ende dieses Beispiels angegeben) wurden mit 98,5 Teilen Tonerbindemittel ( Dialec S 309 (Styrol-Methacrylat-Copolymer)), wie in Beispiel 1 beschrieben, zu einem Toner verarbeitet.

Der Q/M-Wert wurde zu +20,1 µC/g bestimmt.

Die Herstellung des eingesetzten polymeren Kondensationsprodukts erfolgte durch anodische Oxidation von 3-Methoxythiophen (99 %ig) in Acetonitril unter Verwendung von Tetraethylammoniumtetrafluorborat als Leitsalz an einer Kohlefilzelektrode ( Sigratherm GFD der Firma Sigri, spezifische Oberfläche (BET) 0,3 bis 0,4 m²/g, 80 mm Länge, 55 mm Breite, 2 mm Dicke). Das an der Anode haftende Rohprodukt wurde zunächst mit Methylenchlorid und Wasser gewaschen. Dann wurde das Produkt in Acetonitril gelöst und durch Zentrifugieren von ggfs. suspendiertem Feststoff befreit. Durch Einengen der Lösung wurde die obengenannte polymere Wirksubstanz gewonnen.

Beispiel 3

1,5 Teile eines polymeren Kondensationsprodukts (hergestellt wie am Ende dieses Beispiels angegeben) wurde mit 98,5 Teilen Tonerbindemittel ( Dialec S 309 (Styrol-Methacrylat-Copolymer)), wie in Beispiel 1 beschrieben, zu einem Toner verarbeitet.

Der Q/M-Wert wurde zu +18,6 µC/g bestimmt.

Die Herstellung des eingesetzten polymeren Kondensationsprodukts erfolgte, wie in Beispiel 1 beschrieben, jedoch mit dem Unterschied, daß das an der Anode haftende Rohprodukt nur mit Methylenchlorid gewaschen wurde. Anschließend wurde das Produkt in Acetonitril gelöst und zur Entfernung von ggfs. suspendiertem Feststoff durch einen Glasfiltertiegel der Größe G3 filtriert. Durch Einengen der Lösung wurde die obengenannte polymere Wirksubstanz gewonnen.

Beispiel 4

1,5 Teile eines polymeren Kondensationsprodukts von 3-Methoxythiophen (hergestellt wie am Ende dieses Beispiels angegeben) wurden mit 98,5 Teilen Tonerbindemittel (®Dialec S 309 (Styrol-Methacrylat-Copolymer)), wie in Beispiel 1 beschrieben, zu einem Toner verarbeitet.

Der Q/M-Wert wurde zu +6,9 µC/g bestimmt.

Die Herstellung des polymeren Kondensationsprodukts erfolgte durch anodische Oxidation von 3-Methoxythiophen (99 %ig) in Acetonitril unter Verwendung von Tetrabutylammoniumtetrafluorborat als Leitsalz an einer glatten Platin-Elektrode. Das an der Anode haftende Rohprodukt wurde mit Methylenchlorid gewaschen und anschließend gemäß vorliegendem Beispiel als Wirksubstanz eingesetzt.

Beispiel 5

1,5 Teile eines polymeren Kondensationsprodukts von Thiophen (hergestellt wie am Ende dieses Beispiels angegeben) wurden mit 98,5 Teilen Tonerbindemittel (®Dialec S 309 (Styrol-Methacylat-Copolymer)), wie in Beispiel 1 beschrieben, zu einem Toner verarbeitet.

Der Q/M-Wert wurde zu +3,7 µC/g bestimmt.

Die Herstellung des polymeren Kondensationsprodukts erfolgte durch anodische Oxidation von Thiophen in Acetonitril unter Verwendung von Tetraethylammoniumtetrafluorborat als Leitsalz an einer Platin-Elektrode. Das an der Anode haftende Rohprodukt wurde mit Methylenchlorid gewaschen und anschließend gemäß vorliegendem Beispiel als Wirksubstanz eingesetzt. [Vergl. hierzu G. Tourillon, F. Garnier J. Electroanal. Chem. 135 (1982) 173.].

Beispiel 6

1,5 Teile eins polymeren Kondensationsprodukts von Pyrrol (hergestellt wie am Ende dieses Beispieles angegeben) wurden mit 98,5 Teilen Tonerbindemittel (®Dialec S 309 (Styrol-Methacrylat-Copolymer)), wie in Beispiel 1 beschrieben, zu einem Toner verarbeitet.

Der Q/M-Wert wurde zu -3,5 µC/g bestimmt.

Die Herstellung des polymeren Kondensationproduktes erfolgt wie in Beispiel 5 beschrieben, wobei das Thiophen durch eine äquimolare Menge Pyrrol ersetzt wurde.

Beispiel 7

1,5 Teile eines polymeren Kondensationsproduktes von Furan (hergestellt wie am Ende dieses Beispieles angegeben) wurden mit 98,5 Teilen Tonerbindemittel (®Dialec S 309 (Styrol-Methacrylat-Copolymer)), wie in Beispiel 1 beschrieben, zu einem Toner verarbeitet.

Der Q/M-Wert wurde zu +5,0 µC/g bestimmt.

Die Herstellung des polymeren Kondensationsproduktes erfolgt wie in Beispiel 5 beschrieben, wobei das Thiophen durch eine äquimolare Menge Furan ersetzt wurde.

Beispiel 8

1,5 Teile eines polymeren Kondensationsprodukts von 3-Methylthiophen (hergestellt wie am Ende dieses Beispiels angegeben) wurden mit 98,5 Teilen Tonerbindemittel (®Dialec S 309 (Styrol-Methacrylat-Copolymer)), wie in Beispiel 1 beschrieben, zu einem Toner verarbeitet.

Der Q/M-Wert wurde zu -9,4 µC/g bestimmt.

Die Herstellung des polymeren Kondensationsprodukts erfolgt wie in Beispiel 5 beschrieben, wobei das Thiophen durch eine äquimolare Menge 3-Methylthiophen ersetzt wurde.

Beispiel 9

1,5 Teile eines polymeren Kondensationsprodukts von 3-Methoxythiophen (hergestellt wie am Ende dieses Beispiels angegeben) wurden mit 98,5 Teilen Tonerbindemittel (®Dialec S 309 (Styrol-Methacrylat-Copolymer)), wie in Beispiel 1 beschrieben, zu einem Toner verarbeitet.

Der Q/M-Wert wurde zu +4,5 µC/g bestimmt.

Die Herstellung des polymeren Kondensationsprodukts erfolgt wie in Beispiel 1 beschrieben, wobei das Tetraethylammoniumtetrafluorborat durch eine äquimolare Menge Tetraethylammoniumtrifluormethansulfonat ersetzt wurde.

## Ansprüche

1. Polymere Kondensationsprodukte von 5-gliedrigen Heterocyclen mit konjugierten $\pi$-Elektronensystemen mit einem Stickstoff, Sauerstoff-oder Schwefelatom als Heteroatom, die in ihrer oxidierten, wirksamen, kationischen Form eine entsprechende Zahl von Anionen enthalten, mit triboelektrischer Steuerwirkung für elektrophotographische Aufzeichnungsverfahren.

2. Polythiophen-Verbindungen mit triboelektrischer Steuerwirkung nach Anspruch 1, dadurch gekennzeichnet, daß die Verbindungen aus einem Polymeren bestehen, das im wesentlichen Struktureinheiten enthält, die sich von Monomeren der Formel I

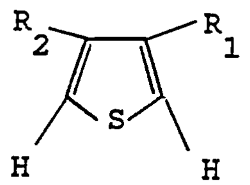

(I)

ableiten, wobei der oxidierten, wirksamen Form zur Kompensation der positiven Ladungen eine entsprechende Zahl von Anionen zugeordnet ist, und wobei $R_1$ und $R_2$ unabhängig voneinander Wasserstoff-oder Halogenatome, Alkoxy($C_1$-$C_4$)-, Alkyl($C_1$-$C_4$)-, primäre Amino-, Monoalkyl($C_1$-$C_4$)-amino-oder Dialkyl($C_1$-$C_4$)-aminogruppen bedeuten.

3. Polypyrrol-Verbindungen mit triboelektrischer Steuerwirkung nach Anspruch 1, dadurch gekennzeichnet, daß die Verbindungen aus einem Polymeren bestehen, das im wesentlichen Struktureinheiten enthält, die sich von Monomeren der Formel II

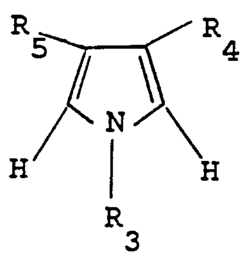

(II)

ableiten, wobei der oxidierten, wirksamen Form zur Kompensation der positiven Ladungen eine entsprechende Zahl von Anionen zugeordnet ist, und wobei $R_4$ und $R_5$ unabhängig voneinander Wasserstoff-oder Halogenatome, Alkoxy($C_1$-$C_4$)-, Alkyl($C_1$-$C_4$)-, Cyan-, primäre Amino-, Monoalkyl($C_1$-$C_4$)-amino-, oder Dialkyl-($C_1$-$C_4$)-amino-gruppen bedeuten, und $R_3$ ein Wasserstoffatom oder eine Alkyl($C_1$-$C_4$)-oder Arylgruppe darstellt.

4. Polyfuran-Verbindungen mit triboelektrischer Steuerwirkung nach Anspruch 1, dadurch gekennzeichnet, daß die Verbindungen aus einem Polymeren bestehen, das im wesentlichen Struktureinheiten enthält, die sich von Monomeren der Formel III

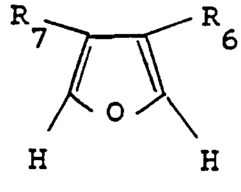

(III)

ableiten, wobei der oxidierten, wirksamen Form zur Kompensation der positiven Ladungen eine entsprechende Zahl von Anionen zugeordnet ist, und wobei $R_6$ und $R_7$ unabhängig voneinander Wasserstof-oder

Halogenatome, Alkoxy($C_1$-$C_4$)-, Alkyl($C_1$-$C_4$)-, primäre Amino-, Monoalkyl($C_1$-$C_4$)-amino-oder Dialkyl($C_1$-$C_4$)-aminogruppen bedeuten.

5. Verwendung der in Ansprüchen 1 bis 4 genannten Verbindingen zur Herstellung von Tonern oder Entwicklern, die zum elektrophotographischen Kopieren bzw. Vervielfältigen von Vorlagen sowie zum Drucken von elektronisch, optisch oder magnetisch gespeicherten Informationen eingesetzt werden.

6. Verwendung der in Ansprüchen 1 bis 4 genannten Verbindungen gemäß Anspruch 5 als farbgebende Komponente für Toner bzw. Entwickler, allein oder in Kombination mit anderen Farbmitteln.

7. Verwendung von Tonern und Entwicklern gemäß Anspruch 5, die eine der in Ansprüchen 1-4 genannten polymeren Verbindungen enthalten.

8. Verwendung der in Ansprüchen 1-4 genannten polymeren Verbindungen als Toner-oder Entwicklerbestandteil zur Strahlungsfixierung auf einem Träger.